# EUROPEAN PATENT SPECIFICATION

(11) **EP 3 078 892 B1**
(45) Date of publication and mention of the grant of the patent: **11.10.2017**
(21) Application number: 16162605.6
(22) Date of filing: 29.03.2016
(51) Int. Cl.: F16L 11/12

(54) **GARDEN WATER SUPPLYING HOSES**
GARTENSCHLÄUCHE ZUR WASSERVERSORGUNG
TUYAUX D'ALIMENTATION EN EAU DE JARDIN

(30) Priority: 08.04.2015 GB 201505953
(43) Date of publication of application: 12.10.2016
(73) Proprietor: SA EXEL Industries, 51200 Epernay (FR)
(72) Inventor: Barnard, Tim, Hucknall, Nottingham NG15 6LH (GB); Boughton, Robert, Twyford, Buckingham MK18 4EJ (GB)
(74) Representative: CSY London

(56) References cited:
- DE-U1-202014 000 070
- DE-U1-202014 009 131
- GB-A- 2 490 276
- US-A- 5 005 613

## Description

This invention relates to garden water supplying hoses of the type which have an expanded and increased length state when pressurised due to water flowing therethrough and a contracted state in the absence of such pressure.

Typically such hoses have an outer fabric-based layer which can contract and in effect crumple as the hose contracts in a non-water filled state and some form of internal elastic member for causing the hose to move to the contracted state in the absence of water pressure.

One such existing expandable hose is described in GB2490276A. That hose has an outer tube formed from a non-elastic and flexible material and an inner tube constructed from an elastic material. The outer tube and inner tube have a first end attached together by a first coupler and a second end attached together by a second coupler. The hose has a shorter length in a non-water flow contracted state and a longer length in an expanded state when water pressure is applied to the interior of the inner elastic tube. The water flow path is through the inner elastic tube whereas the outer tube serves to control and contain expansion of the inner tube in the expanded state. In the contracted state the outer tube is in a crumpled or undulating state whereas in the expanded state the outer tube is relatively taught and restrains the inner tube against further expansion.

Another such expanding hose is described in CN203836417U. That hose has an outer flexible fabric waterproof hose portion and a solid inner elastic portion for causing the hose to move towards its contracted state in the absence of water pressure.

With a hose of the type described in GB2490276A there is a relatively low diameter flow path through the middle of the inner tube. That flow path is also affected and potentially constricted by the elastic nature of the inner tube. Thus in practical experience a relatively high water pressure supply needs to be available to provide good operation of the hose such that described in GB2490276A. Such a hose may need, for example, a supply pressure of 4 bar to operate effectively. On the other hand in some regions of some countries such as, for example, in some parts of the UK, domestic water pressure may be no greater than 2 bar.

In the case of hoses of the type shown in CN203836417 difficulties can arise. If a solid elastic member of a small diameter relative to the outer fabric hosing is chosen to give the desired degree of flexibility and coiling, there can be too much free space between the elastic member and the outer hosing leading to undesirable kinking or crushing of the outer hose during use. If a larger diameter elastic member is used, the overall hose can be too stiff.

It would be desirable to provide a hose which aims at addressing such issues.

DE 202014009131 U describes an expandable hose with a waterproof outertube and an inner elastic for retraction. It is suggested the inner elastic may be a tube.

According to one aspect of the present invention there is provided a garden water supplying hose comprising a flexible waterproof tubing portion for carrying water through the hose with a first connector mounted on a first end of the tubing portion and a second connector mounted on a second end of the tubing portion, the hose further comprising an elastic tube-like member which runs within the waterproof tubing portion and is provided at each end with a respective coupling arrangement for transferring force from the elastic tube-like member to the respective connector such that the elastic tube-like member acts on the first and second connectors so as to tend to draw the connectors together and thus tend to contract the hose when the tube-like member is stretched, wherein each coupling arrangement comprises a plug disposed in the end of the tube-like member and a clamp comprising a clamping portion for clamping the tube-like member to the plug and holding the clamp in position on the tube-like member and at least one lug portion for acting on the respective connector.

In such an arrangement water can flow through the annular passage defined between the flexible waterproof tubing portion and the elastic tube-like member. This can provide a larger cross-sectional area in the hose through which water can flow than if water instead flows through the interior of an inner tube-like portion. Thus a better flowrate can be achieved and the hose may be used effectively with a lower pressure water source. It has been determined that the use of a tube-like member as the elastic contracting element is beneficial since it provides a better performance hose than a solid contracting element - the tube-like element can have a larger external diameter than a solid element to give better anti-kinking performance whilst having a given flexibility to give desired contracting and coiling behaviour. Forming an adequate connection to an inner tube-like element in a hose of the present type presents difficulties however, and the above arrangement also addresses these.

The plug and clamp may together serve to seal each respective end of the elastic tube-like member against the ingress of water.

The plug may be bonded with an adhesive to the elastic tube-like member.

A head of the plug may reside in a water flow path for water flowing through the hose. The head of the plug may be profiled to encourage smooth water flow past the plug and hence the end of the elastic tube-like member. The head of the plug may be domed. The head of the plug may be provided with at least one water directing projection or recess. The head of the plug may project beyond the end of the elastic tube-like member.

The clamp may comprise a plurality of lug portions. Each lug portion may project radially from the clamping portion. The lug portions may be equally annularly spaced around the clamping portion. There may be a pair of lug portions, which may be diametrically opposed.

The connector may comprise at least one seat portion against which a respective lug portion acts. The connector may comprise a plurality of seat portions. The connector may comprise a pair of seat portions. The or each seat portion may comprise a recess for accepting the respective lug portion.

The or each lug portion may be captured in a respective seat portion. The connector may have a bore into which an end of the elastic tube-like member projects with a spacing between a sidewall of the bore and an outer surface of the elastic tube-like member acting as a waterflow path into the interior of the flexible waterproof tubing portion. The at least one seat portion may project from the sidewall of the bore.

The clamp and connector may be arranged so that when the clamp and connector have a first relative orientation, the elastic tube-like member carrying the clamp may be inserted into the connector with the at least one lug portion passing through said bore and past its respective seat, whilst when the clamp and connector are moved to a second relative orientation the at least one lug portion acts on the respective seat and holds the elastic tube-like member against removal from the connector.

Whether or not the above feature is present, then during manufacture the clamp is fitted onto the elastic tube-like member after the elastic tube-like member has been passed through the bore of the connector and past the seat portion. The elastic tube-like member may be stretched and/or the connector and flexible waterproof tubing portion retracted to facilitate this.

The clamp may comprise a metal o-clip which is crimped onto the elastic tube-like member in the region where the plug is disposed. The o-clip can have two ear-like portions which constitute said lugs portions.

The flexible waterproof tubing portion may comprise a length of fabric hose provided with a waterproof lining. The waterproof lining may comprise a plastics material layer melted onto the inner surface of the length of fabric hose. The plastics material may be PVC.

The flexible waterproof tubing portion may be mounted to a body portion of each respective connector by a ferrule which is crimped onto the tubing portion.

A respective O-ring seal may be provided between the flexible waterproof tubing portion and each respective connector.

The flexible waterproof tubing portion may be provided with an external coating layer in the region of the ferrule. The coating may be PVC.

According to another aspect of the present invention there is provided a method of manufacturing a garden water supplying hose according to the first aspect of the invention wherein the connector comprises at least one seat portion against which a respective lug portion acts in the assembled hose and the connector has a bore into which an end of the elastic tube-like member projects in the assembled hose with a spacing between a sidewall of the bore and an outer surface of the elastic tube-like member acting as a waterflow path into the interior of the flexible waterproof tubing portion and wherein the method comprises the steps of:
fitting the clamp onto the elastic tube-like member after the elastic tube-like member has been passed into the bore of the connector and past the seat portion.

The method may comprise the step of stretching the elastic tube-like member and/or retracting the connector and flexible waterproof tubing portion to facilitate fitting of the clamp.

Embodiments of the present invention will now be described, by way of example only, with reference to the accompanying Figures in which:
Figure 1 schematically shows a garden water supplying hose embodying the present invention in a contracted state;
Figure 2 schematically shows the hose of Figure 1 in an extended water carrying state;
Figure 3 is a section through part of the hose assembly shown in Figure 2;
Figure 4 is a section through the same part of the hose assembly shown in

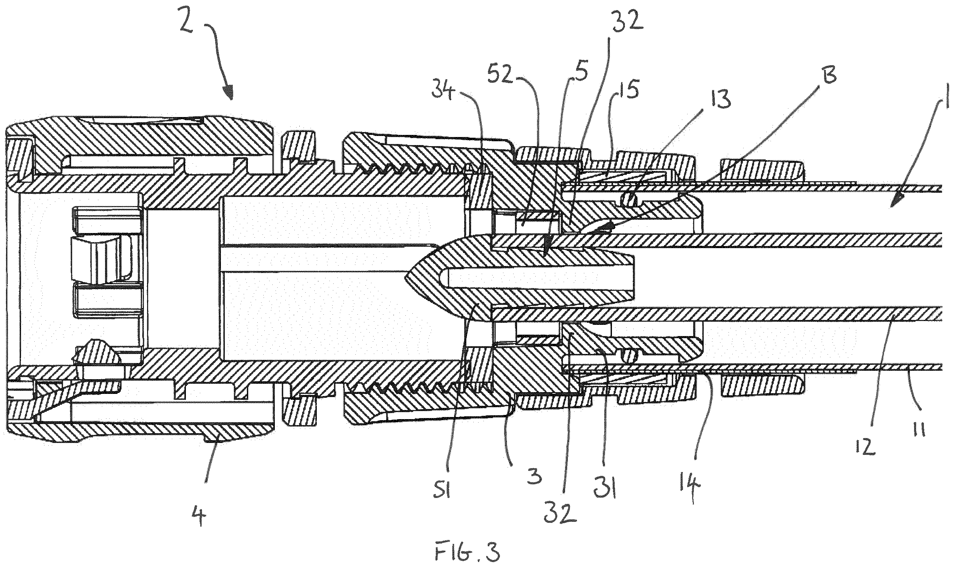

Figure 3 but taken at 90° to the first section;

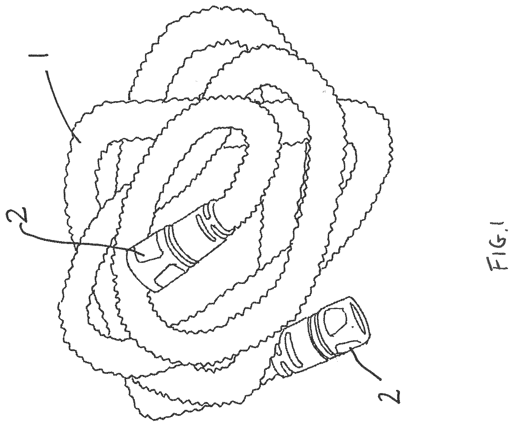

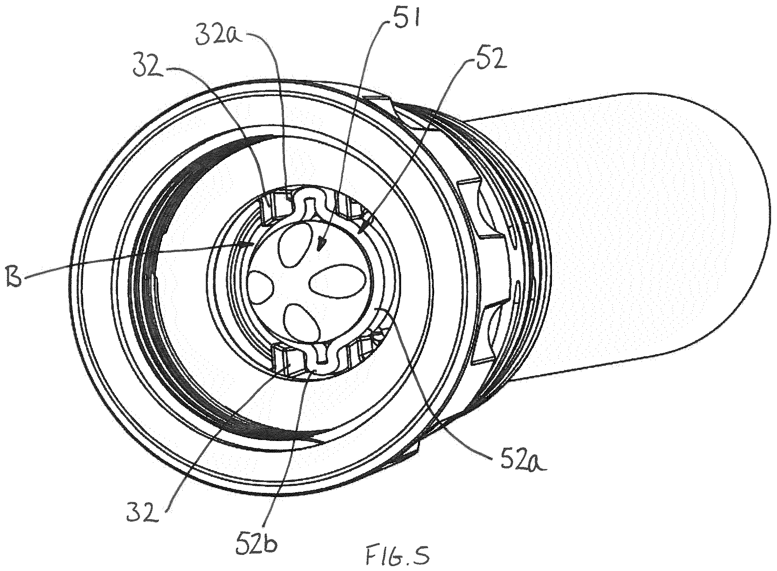

Figure 5 is an end view of part of the hose assembly shown in Figures 1 - 4; and

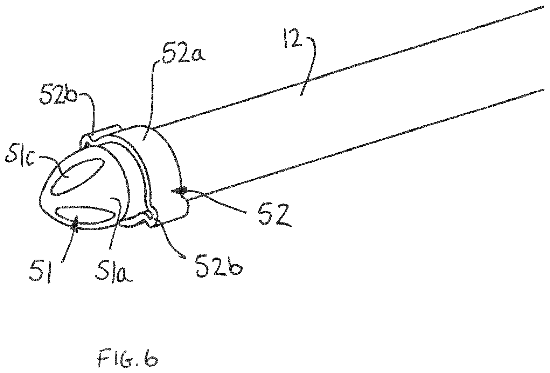

Figure 6 shows, in isolation, a clamp of the hose assembly shown in
Figures 1 - 5 mounted on an elastic tube-like member of the hose assembly shown in Figure 1 - 5.

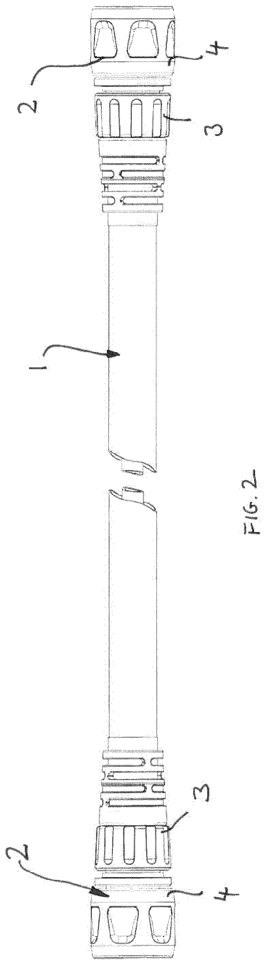

Figures 1 and 2 schematically show a hose assembly comprising a hose portion 1 provided at each end with a respective connector assembly 2. The hose assembly is a garden watering hose assembly for use in, for example, domestic gardens for watering plants and/or washing surfaces. Figure 1 shows the hose assembly in a contracted state which will tend to be adopted when there is no water flowing through the hose assembly. On the other hand Figure 2 shows the hose assembly of Figure 1 in an extended state which will tend to be adopted when water flows through the hose assembly.

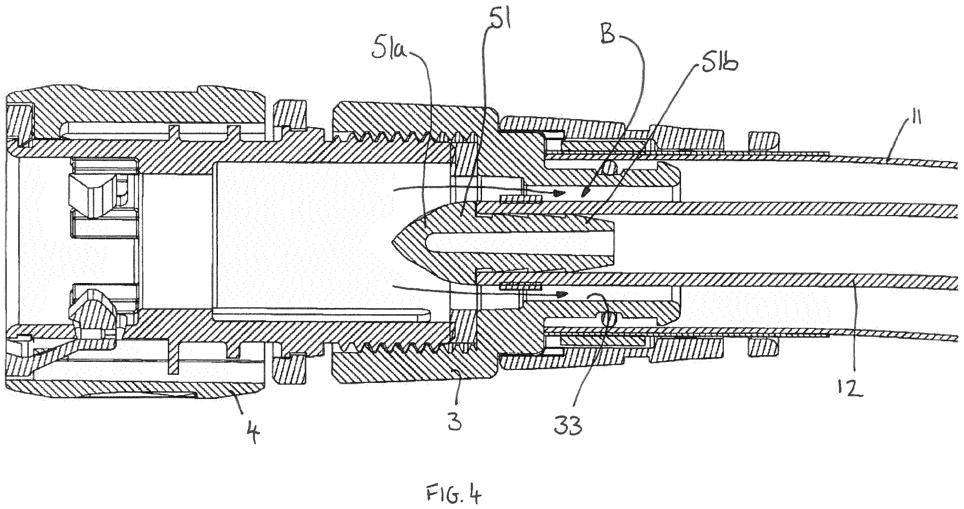

Figures 3 and 4 show one of the connector assemblies 2 in more detail. In the present embodiment the other connector assembly 2 is identical. In alternatives, however, there might be some differences between the respective connector assemblies 2.

Each connector assembly 2 comprises a connector 3 and a fitting 4. The fitting 4 is arranged to threadingly engage with the connector 3 and to allow connection of the hose assembly to other components. The fitting 4 is an industry standard hose fitting which can be connected, for example, to appropriate complimentary fittings on taps, hose reels, hose guns, lances and so on. In the present embodiment a female fitting 4 is provided in each connector assembly 2 which, of course, is arranged for connection to a corresponding male fitting on another component.

In some circumstances, a component (such as a hose gun, or so on) connected to one end of the hose assembly may provide a restriction in the flow path to contribute towards a back pressure which helps the hose assembly move from the contracted state shown in Figure 1 to the extended state shown in Figure 2 when water is flowing therethrough. However, the provision of such an external constriction is not generally necessary. The water flow path through the connector assembly 2 and in particular the connector 3 is generally enough to allow the hose assembly to adopt the extended state shown in Figure 2 when water from a domestic mains supply is fed through the hose.

The hose portion 1 comprises an outer flexible waterproof tubing portion 11 for carrying water through the hose. Provided within this is an elastic tube-like member 12 which is not arranged to carry water but it is arranged to provide the elastic restoring force for tending to move the hose assembly from the extended state shown in Figure 2 towards the contracted state shown in Figure 1. Such contraction will occur in the absence of water pressure in the generally annular space defined between the outer flexible waterproof tubing portion 11 and the inner elastic tube-like member 12.

The outer flexible waterproof tubing portion 11 comprises a length of fabric hose provided with a waterproof lining. The waterproof lining comprises a plastics material layer melted on to the interior surface of the fabric hose. Typically the plastics material may be a PVC material. Waterproof fabric hose of this type is used, for example, in fire hoses provided in public buildings and elsewhere.

As most clearly seen in Figures 3 and 4 the flexible waterproof tubing portion 11 is mounted on a body portion 31 of the connector 3 and an O-ring 13 is provided between the body portion 31 and the inner surface of the flexible waterproof portion 11. A PVC coating 14 is provided on the outside of the flexible waterproof portion 11 in the region of the connector 3 (although this coating may be omitted in alternatives) and the flexible waterproof tubing portion 11 is held in position on the connector 3, and in particular the body portion 31, by a metal ferrule 15 which is crimped in position. Thus the connector 3 is mounted on the end of the flexible waterproof portion 11. It will of course be appreciated that a first of connectors 3 is mounted on a first end of the tubing portion 11 and a second of the connectors 3 is mounted on a second end of the tubing portion 11.

In order that the elastic restoring force of the elastic tube-like member 12 can act to tend to drive the hose assembly to the contracted state shown in Figure 1, a respective coupling arrangement 5 is provided at each end of the hose assembly so that force can be transferred from the elastic tube-like member 12 to the respective connector 3. Again referring to Figures 3 and 4, the coupling arrangement 5 comprises a plug 51 provided in the end of the elastic tube-like member 12 and a clamp 52 which is clamped on to the elastic tube-like member 12 in the region of the plug 51. The plug 51 acts as a substrate on which the clamp 52 can act. Note also that whilst the elastic tube-like member 12 is shaped as a hollow cylinder its ends are occupied (and blocked in the present embodiment) by the respective plug 51.

As can be best seen by considering Figures 5 and 6, the clamp 52 comprises a clamping portion 52a which clamps on to the elastic tube-like member 12 and a pair of lug portions 52b. The lug portions 52b in the present embodiment are diametrically opposed to one another and the lug portions 52b project radially from the clamp portion 52a. In the assembled state, as shown, for example, in Figures 3, 4 and 5, each lug portion 52b is disposed in a respective seat portion 32 of the connector. Each seat portion 32 comprises a recess 32a in which the respective lug portion 52b is located.

As can be seen by considering Figures 3, 4 and 5 the connector 3 has a bore B through which the elastic tube-like member 12 and plug 51 project. The seat portions 32 project from a side wall 33 of this bore B in a generally radial direction towards the elastic tube-like member 12. Away from the seat portions 32 a spacing between the wall 33 of the bore B and the outer surface of the tube-like member 12 provides a water flow path (indicated by arrows in Figure 4) into the interior of the flexible waterproof tubing portion 11 and hence into the hose portion 1.

As can be seen by considering Figures 3, 4 and 5 the water flow path into the hose portion 1 passes past a head 51a of the plug 51 with the head 51a of the plug 51 projecting beyond the end of elastic tube-like portion 12. Correspondingly, a tail 51b of the plug 51 is received in the elastic tube-like portion 12. The outer diameter of the tail 51b is smaller than the outer diameter of the head 51a. The head of the plug 51a is shaped so as to aid water flow from the internal bore of the fitting 4 and into the interior of the waterproof tubing portion 11. Thus the head of the plug 51a is domed shaped in the present embodiment. Further the head comprises a plurality of recesses, or flutes, 51c which are arranged to assist water flow into the hose portion 1.

In the present embodiment, the plug 51 tends to be held in position in the elastic tube-like member 12, during assembly and before the addition of the clamp 52, due to the elasticity of the tube-like member 12 itself. Of course once the clamp 52 is clamped into position, the plug 51 is held tightly in place due to the action of clamping portion 52a. In other embodiments an adhesive might be used between the plug 51 and elastic tube-like member 12 to aid in assembly or a plugged end of the tube-like member 12 otherwise created.

In the present embodiment, during assembly the elastic tube-like member 12, whilst carrying the plug 51, is inserted through the connector 3, and in particular through the bore B, by virtue of stretching the elastic tube-like member 12 and/or retracting the connector 3 and flexible waterproof tubing portion 11, in order to allow the clamp 52 to be crimped into position. This operation is completed without the fitting 4 in position. After this the lug portions 52b are located in their respective seats 32 and the fitting 4 may be threadingly engaged with the connector 3 so that an end wall of the fitting 4 seals against a seal 34 provided in the connector 3.

In the present embodiment the clamp 52 comprises a metal O-clip which may be crimped in position on to the elastic tube-like member 12 when the plug 51 is in position. In the present embodiment the lug portions 52b are extending ear-like portions of the O-clip as such the O-clip, i.e. clamp 52, can be of a single piece of material.

The above described arrangement can allow the provision of a hose assembly which can be operated at a lower water supply pressure than would be the case if the water flow were to be through the inside of the elastic tube-like member 12 instead of the region between the external wall of the elastic tube-like member 12 and the internal wall of the flexible waterproof tubing portion 11. At the same time the arrangement can provide good coiling characteristics without being prone to undesirable kinking or crushing of the outer flexible waterproof tubing portion as well as providing an adequate water flow path into the interior of the tubing portion 1 and a convenient and effective mounting mechanism for allowing the retracting force provided by the elastic tube-like member 12 to act on the respective connectors 3.

## Claims

1. A garden water supplying hose comprising a flexible waterproof tubing portion (11) for carrying water through the hose with a first connector (3) mounted on a first end of the tubing portion (11) and a second connector (3) mounted on a second end of the tubing portion, the hose further comprising an elastic tube-like member (12) which runs within the waterproof tubing portion and is provided at each end with a respective coupling arrangement (5) for transferring force from the elastic tube-like member (12) to the respective connector (3) such that the elastic tube-like member (12) acts on the first and second connectors (3) so as to tend to draw the connectors together and thus tend to contract the hose when the tube-like member (12) is stretched, **characterised in that** each coupling arrangement (5) comprises a plug (51) disposed in the end of the tube-like member (12) and a clamp (52) comprising a clamping portion (52a) for clamping the tube-like member to the plug and holding the clamp in position on the tube-like member and at least one lug portion (52b) for acting on the respective connector.

2. A garden water supplying hose according to claim 1 in which a head of the plug (51) resides in a water flow path for water flowing through the hose and the head of the plug (51) is profiled to encourage smooth water flow past the plug and hence the end of the elastic tube-like member.

3. A garden water supplying hose according to claim 2 in which the head of the plug (51) is domed.

4. A garden water supplying hose according to claim 2 or claim 3 in which the head of the plug (51) is provided with at least one water directing projection or recess.

5. A garden water supplying hose according to any preceding claim in which the clamp comprises a plurality of lug portions (52b) with each lug portion projecting radially from the clamping portion (52a) and the lug portions (52b) equally annularly spaced around the clamping portion.

6. A garden water supplying hose according to any preceding claim in which the connector (3) comprises at least one seat portion (32) against which a respective lug portion (52b) acts.

7. A garden water supplying hose according to claim 6 in which the seat portion (32) comprises a recess for accepting the respective lug portion (52b).

8. A garden water supplying hose according to any preceding claim in which each connector (3) has a bore (B) into which an end of the elastic tube-like member (12) projects with a spacing between a sidewall of the bore and an outer surface of the elastic tube-like member acting as a waterflow path into the interior of the flexible waterproof tubing portion.

9. A garden water supplying hose according to claim 8 when dependent on claim 6 or claim 7 in which the at least one seat portion (32) projects from the sidewall of the bore.

10. A garden water supplying hose according to any preceding claim in which the clamp (5) comprises a metal o-clip which is crimped onto the elastic tube-like member (12) in the region where the plug is disposed.

11. A method of manufacturing a garden water supplying hose according to claim 1 wherein the connector comprises at least one seat portion (32) against which a respective lug portion (52b) acts in the assembled hose and the connector has a bore (B) into which an end of the elastic tube-like member (12) projects in the assembled hose with a spacing between a sidewall of the bore and an outer surface of the elastic tube-like member (12) acting as a waterflow path into the interior of the flexible waterproof tubing portion and wherein the method comprises the steps of:
fitting the clamp (5) onto the elastic tube-like member (12) after the elastic tube-like member has been passed into the bore (B) of the connector (3) and past the seat portion (32).

12. A method according to claim 11 comprising the step of stretching the elastic tube-like member (12) and/or retracting the connector (3) and flexible waterproof tubing portion (11) to facilitate fitting of the clamp (5).

## Patentansprüche

1. Ein Gartenwasserversorgungsschlauch umfassend einen flexiblen wasserdichten Schlauchabschnitt (11) zum Führen von Wasser durch den Schlauch mit einem ersten Anschluss (3), der auf einem ersten Ende des Schlauchabschnitts (11) angebracht ist, und einem zweiten Anschluss (3), der auf einem zweiten Ende des Schlauchabschnitts angebracht ist, wobei der Schlauch ferner ein elastisches schlauchartiges Element (12) umfasst, welches innerhalb des wasserdichten Schlauchabschnitts verläuft und an jedem Ende mit einer entsprechenden Kopplungsanordnung (5) zum Übertragen von Kraft von dem elastischen schlauchartigen Element (12) auf den entsprechenden Anschluss (3) versehen ist, sodass das elastische schlauchartige Element (12) auf den ersten und zweiten Anschluss (3) so wirkt, dass es danach strebt, die Anschlüsse zusammenzuziehen und somit danach strebt, den Schlauch zu kontrahieren, wenn das schlauchartige Element (12) gedehnt ist, **dadurch gekennzeichnet, dass** jede Kopplungsanordnung (5) einen Stecker (51), der in dem Ende des schlauchartigen Elements (12) angeordnet ist, und eine Klemme (52), die einen Klemmabschnitt (52a) zum Klemmen des schlauchartigen Elemnts an den Stecker und in Position Halten der Klemme auf dem schlauchartigen Element und wenigstens einen Ösenabschnitt (52b) zum Wirken auf den entsprechenden Anschluss umfasst, umfasst.

2. Ein Gartenwasserversorgungsschlauch gemäß Anspruch 1, bei welchem ein Kopf des Steckers (51) in einem Wasserströmungspfad für Wasser liegt, das durch den Schlauch fließt, und der Kopf des Steckers (51) profiliert ist, um einen glatten Wasserfluss an dem Stecker und somit dem Ende des elastischen schlauchartigen Elements vorbei zu fördern.

3. Ein Gartenwasserversorgungsschlauch gemäß Anspruch 2, bei welchem der Kopf des Steckers (51) gewölbt ist.

4. Ein Gartenwasserversorgungsschlauch gemäß Anspruch 2 oder Anspruch 3, bei welchem der Kopf des Steckers (51) mit wenigstens einem wasserlenkenden Vorsprung oder Rücksprung versehen ist.

5. Ein Gartenwasserversorgungsschlauch gemäß einem der vorherigen Ansprüche, bei welchem die Klemme eine Vielzahl an Ösenabschnitten (52b) umfasst, wobei jeder Ösenabschnitt radial von dem Klemmabschnitt (52a) hervorsteht und die Ösenabschnitte (52b) gleichmäßig ringförmig um den Klemmabschnitt beabstandet sind.

6. Ein Gartenwasserversorgungsschlauch gemäß einem der vorherigen Ansprüche, bei dem der Anschluss (3) wenigstens einen Sitzabschnitt (32) umfasst, gegen welchen ein entsprechender Ösenabschnitt (52b) wirkt.

7. Ein Gartenwasserversorgungsschlauch gemäß Anspruch 6, bei welchem der Sitzabschnitt (32) einen Rücksprung zur Aufnahme des entsprechenden Ösenabschnitts (52b) umfasst.

8. Ein Gartenwasserversorgungsschlauch gemäß einem der vorherigen Ansprüche, bei welchem jeder Anschluss (3) eine Bohrung (B) aufweist, in welche hinein ein Ende des elastischen schlauchartigen Elements (12) hervorsteht mit einem Abstand zwischen einer Seitenwand der Bohrung und einer äußeren Oberfläche des elastischen schlauchartigen Elements, der als ein Wasserströmungspfad in das Innere des flexiblen wasserdichten Schlauchabschnitts hinein dient.

9. Ein Gartenwasserversorgungsschlauch gemäß Anspruch 8, wenn dieser abhängig von Anspruch 6 oder Anspruch 7 ist, bei welchem wenigstens ein Sitzabschnitt (32) von der Seitenwand der Bohrung hervorsteht.

10. Ein Gartenwasserversorgungsschlauch gemäß einem der vorherigen Ansprüche, bei welchem die Klemme (5) eine Metall-O-Spange umfasst, welche auf das elastische schlauchartige Element (12) in dem Bereich gequetscht ist, wo der Stecker angeordnet ist.

11. Ein Verfahren zum Herstellen eines Gartenwasserversorgungsschlauchs gemäß Anspruch 1, wobei der Anschluss wenigstens einen Sitzabschnitt (32) umfasst, gegen welchen in dem zusammengebauten Schlauch ein entsprechender Ösenabschnitt (52b) wirkt, und der Anschluss eine Bohrung (B) aufweist, in welche hinein im zusammengebauten Zustand ein Ende des elastischen schlauchartigen Elements (12) ragt, mit einem Abstand zwischen einer Seitenwand der Bohrung und einer äußeren Oberfläche des elastischen schlauchartigen Elements (12), der als ein Wasserströmungspfad in das Innere des flexiblen wasserdichten Schlauchabschnitts hinein dient und wobei das Verfahren die Schritte umfasst:
Anlegen der Klemme (5) auf das elastische schlauchartige Element (12), nachdem das elastische schlauchartige Element in die Bohrung (B) des Anschlusses (3) hinein und an dem Sitzabschnitt (32) vorbei geführt worden ist.

12. Ein Verfahren gemäß Anspruch 11, umfassend den Schritt des Dehnens des elastischen schlauchartigen Elements (12) und/oder Zurückziehens des Anschlusses (3) und flexiblen wasserdichten Schlauchabschnitts (11) um ein Anlegen der Klammer (5) zu ermöglichten.

## Revendications

1. Tuyau d'alimentation en eau de jardin comprenant une partie de tube imperméable flexible (11) pour transporter l'eau à travers le tuyau avec un premier connecteur (3) monté sur une première extrémité de la partie de tube (11) et un second connecteur (3) monté sur une seconde extrémité de la partie de tube, le tuyau comprenant en outre un élément élastique de forme tubulaire (12) qui s'étend à l'intérieur de la partie de tube imperméable et est prévu, au niveau de chaque extrémité, avec un agencement de couplage (5) respectif pour transférer la force de l'élément élastique de forme tubulaire (12) au connecteur (3) respectif, de sorte que l'élément élastique de forme tubulaire (12) agit sur les premier et second connecteurs (3) pour avoir tendance à rapprocher les connecteurs et ainsi avoir tendance à contracter le tuyau lorsque l'élément de forme tubulaire (12) est étiré, **caractérisé en ce que** chaque agencement de couplage (5) comprend un bouchon (51) disposé dans l'extrémité de l'élément de forme tubulaire (12) et un collier (52) comprenant une partie de serrage (52a) pour serrer l'élément de forme tubulaire sur le bouchon et maintenir le collier en position sur l'élément de forme tubulaire et ayant au moins une partie de patte (52b) pour agir sur le connecteur respectif.

2. Tuyau d'alimentation en eau de jardin selon la revendication 1, dans lequel une tête du bouchon (51) se trouve dans une trajectoire d'écoulement d'eau pour l'eau s'écoulant à travers le tuyau et la tête du bouchon (51) est profilée pour favoriser l'écoulement d'eau en douceur au-delà du bouchon et par conséquent l'extrémité de l'élément élastique de forme tubulaire.

3. Tuyau d'alimentation en eau de jardin selon la revendication 2, dans lequel la tête du bouchon (51) est en forme de dôme.

4. Tuyau d'alimentation en eau de jardin selon la revendication 2 ou la revendication 3, dans lequel la tête du bouchon (51) est prévue avec au moins une saillie ou un évidement de direction d'eau.

5. Tuyau d'alimentation en eau de jardin selon l'une quelconque des revendications précédentes, dans lequel le collier comprend une pluralité de parties de patte (52b), avec chaque partie de patte qui fait saillie radialement à partir de la partie de serrage (52a) et les parties de patte (52b) espacées de manière annulaire à égale distance autour de la partie de serrage.

6. Tuyau d'alimentation en eau de jardin selon l'une quelconque des revendications précédentes, dans lequel le connecteur (3) comprend au moins une partie de siège (32) contre laquelle une partie de patte (52b) respective agit.

7. Tuyau d'alimentation en eau de jardin selon la revendication 6, dans lequel la partie de siège (32) comprend un évidement pour accepter la partie de patte (52b) respective.

8. Tuyau d'alimentation en eau de jardin selon l'une quelconque des revendications précédentes, dans lequel chaque connecteur (3) a une alésage (B) dans lequel une extrémité de l'élément élastique de type tubulaire (12) fait saillie avec un espacement entre une paroi latérale de l'alésage et une surface externe de l'élément élastique de forme tubulaire servant de trajectoire d'écoulement d'eau dans l'intérieur de la partie de tube imperméable flexible.

9. Tuyau d'alimentation en eau de jardin selon la revendication 8, lorsqu'elle dépend de la revendication 6 ou de la revendication 7, dans lequel la au moins une partie de siège (32) fait saillie de la paroi latérale de l'alésage.

10. Tuyau d'alimentation en eau de jardin selon l'une quelconque des revendications précédentes, dans lequel le collier (5) comprend un collier torique métallique qui est serti sur l'élément élastique de forme tubulaire (12) dans la région dans laquelle le bouchon est disposé.

11. Procédé pour fabriquer un tuyau d'alimentation en eau de jardin selon la revendication 1, dans lequel le connecteur comprend au moins une partie de siège (32) contre laquelle une partie de patte (52b) respective agit dans le tuyau assemblé et le connecteur a un alésage (B) dans lequel une extrémité de l'élément élastique de forme tubulaire (12) fait saillie dans le tuyau assemblé avec un espacement entre une paroi latérale de l'alésage et une surface externe de l'élément élastique de forme tubulaire (12) servant de trajectoire d'écoulement d'eau dans l'intérieur de la partie de tube imperméable flexible et dans lequel le procédé comprend les étapes consistant à :
monter le collier (5) sur l'élément élastique de forme tubulaire (12) après que l'élément élastique de forme tubulaire est passé dans l'alésage (B) du connecteur (3) et au-delà de la partie de siège (32).

12. Procédé selon la revendication 11, comprenant l'étape consistant à étirer l'élément élastique de forme tubulaire (12) et/ou rétracter le connecteur (3) et la partie de tube imperméable flexible (11) pour faciliter le montage du collier (5).
